# EUROPÄISCHE PATENTSCHRIFT

(11) **EP 2 844 514 B1**
(45) Veröffentlichungstag und Bekanntmachung des Hinweises auf die Patenterteilung: **13.01.2016**
(21) Anmeldenummer: 13704882.3
(22) Anmeldetag: 14.02.2013
(51) Int. Cl.: B60L 11/18, G01C 21/36, H04L 29/08

(54) **VERFAHREN ZUR DURCHFÜHRUNG WENIGSTENS EINES BERECHNUNGSPROZESSES IN EINEM KRAFTFAHRZEUG UND KRAFTFAHRZEUG**
METHOD FOR PERFORMING AT LEAST ONE COMPUTATION PROCESS IN A MOTOR VEHICLE, AND MOTOR VEHICLE
PROCÉDÉ POUR EXÉCUTER AU MOINS UN PROCESSUS DE CALCUL DANS UN VÉHICULE À MOTEUR ET VÉHICULE À MOTEUR

(30) Priorität: 03.05.2012 DE 102012008978
(43) Veröffentlichungstag der Anmeldung: 11.03.2015
(73) Patentinhaber: Audi AG, 85045 Ingolstadt (DE)
(72) Erfinder: GÜNTER, Christian, 85092 Kösching (DE)
(74) Vertreter: Herbst, Matthias Heinz
(86) Internationale Anmeldenummer: PCT/EP2013/000426
(87) Internationale Veröffentlichungsnummer: WO 2013/164045

(56) Entgegenhaltungen:
- US-A1- 2008 052 145
- US-A1- 2008 281 663
- US-A1- 2011 025 267
- US-A1- 2011 246 252

## Beschreibung

Die Erfindung betrifft ein Verfahren zur Durchführung wenigstens eines Berechnungsprozesses in einem Kraftfahrzeug mit einem Elektromotor und einem diesem zugeordneten Energiespeicher. Daneben betrifft die Erfindung ein zur Durchführung des Verfahrens geeignetes Kraftfahrzeug.

In modernen Kraftfahrzeugen wird eine steigende Vielzahl von Messdaten erfasst, um in immer genaueren und gezielteren Auswertungsvorgängen für den Fahrer und für Fahrzeugsysteme geeignete Ausgangsdaten zu ermitteln. Während des Betriebs des Kraftfahrzeugs müssen mithin immer rechenintensivere Berechnungsprozesse durchgeführt werden. Beispiele hierfür sind die genaue Auswertung von während des Betriebs des Kraftfahrzeugs aufgenommenen Messdaten, insbesondere Kameradaten und dergleichen, exakte Reichweitenberechnungen, Aktualisierungen von Systemdaten bestimmter Kraftfahrzeugsysteme, beispielsweise eines Navigationssystems, und dergleichen.

Diese Vorgänge sind äußerst energieintensiv, was sich negativ auf die Reichweite von Kraftfahrzeugen, insbesondere von solchen mit einem Elektromotor, auswirkt. Um die rechenintensiven Aufgaben durchzuführen, müssen Recheneinrichtungen des Kraftfahrzeugs in vielerlei Belangen größer dimensioniert werden, was in steigenden Preisen und entsprechend auch steigendem Energieverbrauch resultiert. Gerade im Bereich von Elektro-Kraftfahrzeugen wirkt sich dies auf den Preis und die ohnehin als kritisch betrachtete Reichweite äußerst negativ aus.

Der Erfindung liegt daher die Aufgabe zugrunde, eine Möglichkeit anzugeben, äußerst rechenintensive Berechnungsprozesse auch auf kleiner dimensionierten Recheneinrichtungen durchzuführen und den Energieverbrauch während des Betriebs bei einem Elektro-Kraftfahrzeug zu minimieren. US 2011025267 offenbart einen Berechnungsprozess in einem Fahrzeug mit einem Elektromotor und einem Energiespeicher, wobei während des Ladens des Energiespeichers eine Kommunikationsverbindung mit einem weiteren im Ladeprozess befindlichen Fahrzeug aufgebaut wird.

Die nachveröffentlichte DE 10 2011 086 903 A1 betrifft eine Fahrzeugelektrizitätsbedarfsschätzvorrichtung, eine Elektrizitätsinformationsverarbeitungsvorrichtung und ein Ladesystem. Dabei soll zum genaueren Schätzen eines elektrischen Energieverbrauchs eines Fahrzeugs auf der Grundlage eines Fahrplanes des Fahrzeugs eine Teilung der Verarbeitungslast zum Schätzen der elektrischen Energie, die für die Fahrt der Fahrzeuge benötigt wird, zwischen einer Basisstation und mehreren Fahrzeugen erfolgen. Dabei nimmt ein Standardfahrzeug einen elektrischen Standardenergieverbrauch auf, der von einem Dienstzentrum einem allgemeinen Fahrzeug zur Verfügung gestellt wird. Das allgemeine Fahrzeug errechnet unter Berücksichtigung des Standardenergieverbrauchs einen Elektrizitätsbedarf durch Schätzung.

Zur Lösung dieser Aufgabe ist bei diesem Verfahren der eingangs genannten Art erfindungsgemäß vorgesehen, dass während eines Ladeprozesses des Energiespeichers eine Kommunikationsverbindung mit wenigstens einem weiteren im Ladeprozess befindlichen Kraftfahrzeug aufgebaut wird, wobei Recheneinrichtungen der verbundenen Kraftfahrzeuge als ein Rechnercluster zur Durchführung des Berechnungsprozesses verwendet werden, wobei die Kommunikationsverbindung über die Stromzuführung zu dem Energiespeicher hergestellt wird.

Gerade bei Elektro-Kraftfahrzeugen ist es häufig so, dass sich diese eine lange Zeit in einem Ladeprozess befinden, was grundsätzlich die Möglichkeit zur Durchführung von Berechnungsprozessen außerhalb des Betriebs des Kraftfahrzeugs eröffnet. Insbesondere ist es jedoch auch möglich, da bereits rein statistisch betrachtet immer eine Mehrzahl von Elektro-Kraftfahrzeugen im Ladeprozess befindlich ist, zur Durchführung von rechenintensiven Berechnungsprozessen die Rechenleistungen verschiedener im Ladeprozess befindlicher Kraftfahrzeuge zu vereinen, indem eine Kommunikationsverbindung aufgebaut wird, die es ermöglicht, die verschiedenen Recheneinrichtungen zu einem Rechencluster zusammenzuschließen, auf dem vorbestimmte rechenintensive Berechnungsprozesse durchgeführt werden können. Rechenintensive Aufgaben werden mithin auf den Ladeprozess des Kraftfahrzeugs beschränkt und in einem Kraftfahrzeug-Rechnercluster berechnet, das bedeutet, die benötigte Rechenleistung wird auf die Rechenkapazitäten der Recheneinrichtungen der beteiligten Kraftfahrzeuge, die sich gerade in einem Ladevorgang befinden, aufgeteilt.

Auf diese Weise kann also während des Betriebs des Kraftfahrzeugs Energie eingespart werden, die zur Steuerung und/oder für Antriebsmechanismen während der Fahrt zur Verfügung steht. Die Recheneinrichtungen der Kraftfahrzeuge können kleiner dimensioniert werden, da nie eine Recheneinrichtung alleine die komplexe, rechenintensive Aufgabe, den Berechnungsprozess, durchführen muss. Indirekt ist es also möglich, über das erfindungsgemäße Verfahren die Reichweite von Elektro-Kraftfahrzeugen zu erhöhen und den Preis von Elektro-Kraftfahrzeugen zu reduzieren, nachdem günstigere Recheneinrichtungen verwendet werden können und der Energieverbrauch während des Betriebs reduziert werden kann.

Es ist vorgesehen, dass die Kommunikationsverbindung über die Stromzuführung zu dem Energiespeicher hergestellt wird, insbesondere durch Aufmodulation von Informationen. Das Kraftfahrzeug kann immer dann, wenn es an eine externe Stromversorgung angeschlossen wird, eine Kommunikationsverbindung über die entsprechenden Stromleitungen herstellen. Derartige Verfahren, bei denen Informationen aufmoduliert über Stromleitungen übertragen werden können, sind im Stand der Technik bereits grundsätzlich bekannt und können auch im Rahmen des erfindungsgemäßen Verfahrens vorteilhaft eingesetzt werden. Auf diese Weise sind keine weiteren, komplexen, insbesondere drahtgebundenen Übertragungswege mehr erforderlich.

Alternativ kann jedoch in einer nicht zur Erfindung gehörigen Ausgestaltung auch vorgesehen sein, dass die Kommunikationsverbindung drahtgebunden und/oder zumindest teilweise drahtlos hergestellt wird. Es ist also auch denkbar, beispielsweise ein spezielles Anschlusskabel vorzusehen, welches beispielsweise integriert mit einem Strom-Anschlusskabel realisiert werden kann, um die Kommunikationsverbindung über eine weitere Leitung neben der Stromleitung herzustellen. Bevorzugt ist es jedoch, wenn die Kommunikationsverbindung wenigstens teilweise drahtlos hergestellt wird, wobei sich das Kraftfahrzeug beispielsweise über ein W-LAN am Ladeort mit einem Netzwerk verbinden kann. Selbstverständlich sind auch andere Verbindungswege über Funk grundsätzlich denkbar, weil in den meisten modernen Kraftfahrzeugen diesbezüglich ohnehin geeignete Schnittstellen vorhanden sind.

In weiterer Ausgestaltung der vorliegenden Erfindung kann zur Bildung und/oder Steuerung des Rechnerclusters ein insbesondere keinem Kraftfahrzeug zugeordneter Server verwendet werden. Es ist also denkbar, dass die Kommunikationsverbindung zwischen den Rechnereinrichtungen indirekt oder zumindest gesteuert über einen Server, mithin eine zentrale Recheneinrichtung, realisiert wird, die die Bildung und die Steuerung des Rechnerclusters übernehmen kann. Der Server, der unabhängig von einem bestimmten Kraftfahrzeug realisiert ist und ständig verfügbar ist, koordiniert also das oder gegebenenfalls die mehreren Rechnercluster. Bekannte Architekturen zur Bildung von Rechnerclustern können auch im Rahmen der vorliegenden Erfindung eingesetzt werden.

Zweckmäßigerweise kann durch den Server eine Anonymisierung von im Rahmen des Berechnungsprozesses auszutauschender Daten vorgenommen werden. So kann auch dem Datenschutz Genüge getan werden, indem Anfragen, zu bearbeitende und/oder bearbeitete Daten und dergleichen, die innerhalb des Rechnerclusters übertragen werden, anonymisiert werden, so dass beispielsweise nicht ein Besitzer eines Kraftfahrzeugs aufgrund der Bildung des Rechnerclusters nachvollziehen kann, welche Strecken ein Besitzer eines anderen Kraftfahrzeugs des Rechnerclusters gefahren ist und dergleichen.

Ferner kann vorgesehen sein, dass in einem Rechnercluster nur Kraftfahrzeuge eines Herstellers und/oder Typs und/oder in einer bestimmten geographischen Region befindliche Kraftfahrzeuge verbunden werden. Werden nur Kraftfahrzeuge eines Herstellers und/oder Typs in einem Rechnercluster zusammengefasst, so kann sichergestellt werden, dass alle benötigten Funktionalitäten, insbesondere Programmmittel und Algorithmen, von den Recheneinrichtungen der anderen Kraftfahrzeuge des Rechnerclusters auch zur Verfügung gestellt werden können. Ein Hersteller kann die Recheneinrichtungen gezielt so auslegen, dass bestimmte, insbesondere hersteller- und/oder typspezifische Berechnungsprozesse optimal innerhalb eines während des Ladeprozesses gebildeten Rechnerclusters durchgeführt werden können. Das bedeutet, die Rechnereinrichtungen der innerhalb eines Clusters zu verbindenden Kraftfahrzeuge werden auf den Betrieb im Rechnercluster hin ausgebildet beziehungsweise konfiguriert.

Im Rahmen der vorliegenden Erfindung kann es auch zweckmäßig sein, in einem Rechnercluster nur in einer bestimmten geographischen Region befindliche Kraftfahrzeuge zu verbinden. Dies ist insbesondere dann zweckmäßig, wenn von verschiedenen Kraftfahrzeugen Daten zum Berechnungsprozess beigesteuert werden, die sich insbesondere auf die Region selbst beziehen, worauf im Folgenden noch näher eingegangen werden wird. Insbesondere kann vorgesehen sein, dass, insbesondere bei einer Nutzung einer gemeinsamen Datenbasis mehrerer Kraftfahrzeuge für einen Berechnungsprozess, die geographische Region durch eine aktuelle Reichweite des Kraftfahrzeugs definiert wird. Hauptsächlich relevant sind für das Kraftfahrzeug also hauptsächlich die Daten, die von Orten innerhalb seiner Reichweite stammen, so dass die Reichweite ein Kriterium ist, welche zur Bildung von Rechnerclustern unter Berücksichtigung der geographischen Position von Kraftfahrzeugen in Betracht gezogen werden kann. So werden insbesondere Kraftfahrzeuge in einem Rechnercluster verbunden, die jeweils Daten besitzen, die für die anderen Kraftfahrzeuge relevant sind.

Als Berechnungsprozess kann beispielsweise eine Nachbearbeitung von während einer Fahrt aufgenommenen Messdaten und/oder eine Reichweitenberechnung und/oder eine Vorausberechnung von Daten hinsichtlich einer noch erfolgenden Fahrt erfolgen. Möglich ist es also beispielsweise, während einer Fahrt aufgenommene Messdaten nachzuverarbeiten, insbesondere dann, wenn es sich um aufwendigere Nachbearbeitungsprozesse wie beispielsweise die Bildverarbeitung handelt. So ist es beispielsweise denkbar, um einem Fahrzeugsystem verbesserte Informationen zur Verfügung zu stellen, beispielsweise verbesserte annotierte Kartendaten für ein Navigationssystem, dass mit einer Kamera des Kraftfahrzeugs aufgenommene Bilder während des Ladeprozesses hochgenau ausgewertet werden, um Schlussfolgerungen über Veränderungen oder Besonderheiten einer befahrenen Strecke zu ziehen und hier gegebenenfalls eine Aktualisierung von Systemdaten zu ermöglichen. Auch eine Reichweitenberechnung kann als Berechnungsprozess hochgenau durchgeführt werden, nachdem bekanntermaßen viele insbesondere genaue Algorithmen zur Reichweitenberechnung einen äußerst hohen Berechnungsaufwand aufweisen und daher, insbesondere, wenn eine Echtzeitinformation verlangt wird, nur bedingt tatsächlich eingesetzt werden können. Die vorliegende Erfindung erlaubt es nun, während des Ladeprozesses zumindest für die aktuell verfügbare Energie eine hochgenaue Reichweitenangabe zu erzeugen und vorzuhalten. Schließlich ist es auch denkbar, Vorausberechnungen vorzunehmen, beispielsweise, wenn ein nächstes Fahrtziel bereits bekannt ist und diesbezüglich sinnvolle Vorausberechnungen angestellt werden sollen. Dabei sei an dieser Stelle auch angemerkt, dass die Berechnungsprozesse selbstverständlich auch vorbereitende Berechnungsprozesse sein können, die nicht von aktuellen Daten abhängige Ermittlungen durchführen, so dass sich ein später insbesondere in Echtzeit durchzuführender Berechnungsprozess in seiner Komplexität beziehungsweise der benötigten Rechenleistung reduziert.

In diesem Zusammenhang kann vorgesehen sein, dass während einer Fahrt des Kraftfahrzeugs eine weniger genaue Auswertung von Messdaten erfolgt, welcher im Rahmen des Berechnungsprozesses eine genauere Auswertung folgt. Es kann also vorgesehen sein, dass während des Betriebs des Kraftfahrzeugs eine weniger Rechenleistung benötigende, dafür etwas ungenauere Auswertung erfolgt, welche dann letztlich im Berechnungsprozess während des Ladeprozesses im Rechnercluster unter Mitnutzung von Rechenleistungen anderer Kraftfahrzeuge präzisiert werden kann.

Wie bereits erwähnt, kann in einer besonders vorteilhaften Ausführungsform der vorliegenden Erfindung vorgesehen sein, dass wenigstens ein Daten, insbesondere Messdaten, mehrerer Kraftfahrzeuge verwendender Berechnungsprozess durchgeführt wird. Es liegt dann folglich eine gemeinsame Datenbasis vor, die im Rahmen des Berechnungsprozesses ausgewertet werden kann. So kann beispielsweise vorgesehen sein, dass eine Aktualisierung von Daten eines Navigationssystems und/oder von einer Reichweitenberechnung zugrunde liegenden Messdaten unter Berücksichtigung von Daten anderer Kraftfahrzeuge erfolgt. Dabei kann es im Übrigen sinnvoll und zweckmäßig sein, wenn die Ergebnisse des Berechnungsprozesses auch für mehrere Rechnercluster enthaltene Kraftfahrzeuge verwertet wird, beispielsweise dann, wenn vergleichbare oder gleiche Fahrzeugsysteme vorliegen, die diese Daten allesamt verwenden können. Beispielsweise können also im Rahmen der vorliegenden Erfindung immer die aktuellsten Messdaten für bestimmte Orte ausgewertet werden, beispielsweise, indem Steigungsprofile aus aktuellen Messdaten eines anderen Kraftfahrzeugs gefolgert werden oder durch Vergleich von Kamerabildern des einen Kraftfahrzeugs mit aktuelleren Kamerabildern eines anderen Kraftfahrzeugs festgestellt werden kann, dass neue Verkehrsschilder aufgestellt wurden, eine Baustelle vorliegt und dergleichen.

Entsprechend bietet das erfindungsgemäße Verfahren in dieser Ausführungsform nicht nur die Möglichkeit, Rechenleistungen zu teilen und gemeinsam zu nutzen, sondern auch die Datenbasis um entsprechende Daten anderer Kraftfahrzeuge zu erweitern, mithin eine gemeinsame Datenbasis von im Ladeprozess befindlichen Kraftfahrzeugen eines Rechnerclusters zu schaffen. In diesem Zusammenhang ist es zweckmäßig, wenn das Kraftfahrzeug alle zur Verfügung stehenden Sensordaten aufzeichnet und diese Daten als Messdaten in einer internen Speichereinrichtung speichert, auf die die Rechnereinrichtung und mithin auch das gesamte Rechnercluster Zugriff hat. Dabei kann es sich beispielsweise um Messdaten eines GPS-Sensors, eines Winkelsensors, eines Beschleunigungssensors, Leistungsdaten (Verbrauch/Gewinn), Messdaten eines Richtungssensors, Daten von Sensoren für Umweltbedingungen (Temperatur, barometrischer Druck, Luftfeuchtigkeit), Daten von Sensoren zur Airbag-Auflösung, Kameradaten (Bilder), Gewichtsensoren für die Ladung und dergleichen handeln.

Im Hinblick auf eine Aktualisierung von Daten eines Navigationssystems und/oder von einer Reichweitenberechnung kann die Aktualisierung bezogen auf im Rahmen einer aktuellen Reichweite des Kraftfahrzeugs erreichbare Orte erfolgen. Es werden also hauptsächlich die Informationen aktualisiert, die bei der aktuellen Reichweite des Kraftfahrzeugs für die nächste Fahrt relevant sein können. So wird die benötigte Rechenleistung weiter reduziert, indem nur notwendige Daten behandelt werden.

Neben dem Verfahren betrifft die vorliegende Erfindung auch ein Kraftfahrzeug, umfassend einen Elektromotor, einen diesen zugeordneten Energiespeicher, eine Recheneinrichtung und Mittel zur Herstellung einer Kommunikationsverbindung zur Durchführung des erfindungsgemäßen Verfahrens. Das Kraftfahrzeug ist also geeignet, im Rahmen des erfindungsgemäßen Verfahrens eingesetzt zu werden, indem die Recheneinrichtung und entsprechende Mittel zur Herstellung einer Kommunikationsverbindung während des Ladeprozesses bereits vorhanden sind, so dass das Rechnercluster gebildet werden kann, um rechenintensive Berechnungsprozesse durchzuführen. Hierzu können beispielsweise geeignete Computerprogramme auf der Recheneinrichtung vorhanden sein, und es können die benötigen Hardwarekomponenten zur Herstellung der Kommunikationsverbindung vorgesehen sein. Gemeinsam mit anderen Kraftfahrzeugen können so Rechenleistungen eines Berechnungsprozesses auf mehrere Recheneinrichtung verteilt werden und es kann insbesondere auch eine gemeinsame Datenbasis geschaffen werden, insbesondere im Hinblick auf eine Aktualisierung von Daten eines Navigationssystems oder dergleichen.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipskizze eines erfindungsgemäßen Kraftfahrzeugs, und
- Fig. 2: eine Prinzipskizze eines erfindungsgemäße gebildeten Rechnerclusters.

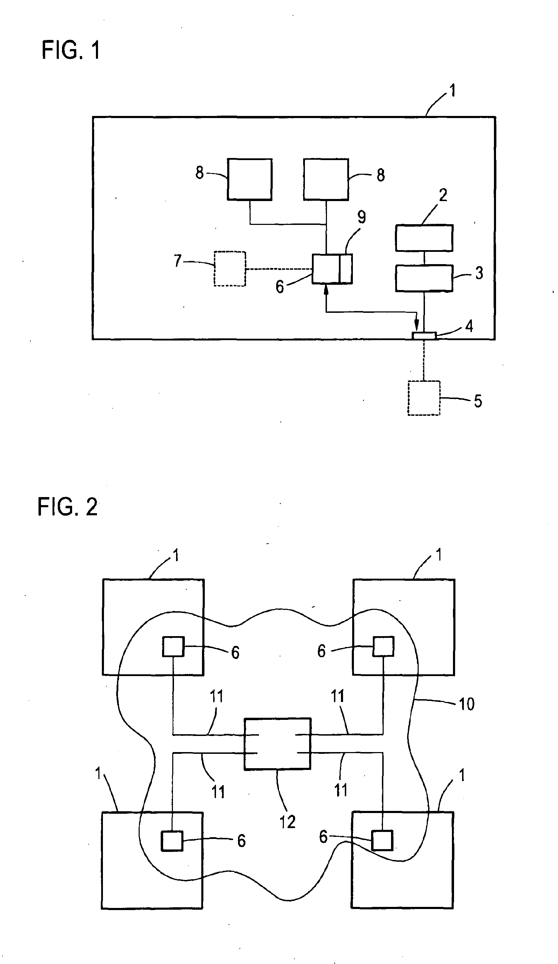

Fig. 1 zeigt eine Prinzipskizze eines erfindungsgemäßen Kraftfahrzeugs 1. Dabei handelt es sich um ein Elektro-Kraftfahrzeug 1, das bedeutet, es ist ein Elektromotor 2 vorgesehen, welcher insbesondere auch generatorisch betrieben werden kann, sowie ein dem Elektromotor 2 zugeordneter Energiespeicher 3, insbesondere eine Hochspannungsbatterie. Über einen entsprechenden Anschluss 4 kann das Kraftfahrzeug zum Laden des Energiespeichers 3 an eine hier nur angedeutete, nicht zum Kraftfahrzeug gehörige Ladestation 5 angeschlossen werden.

Das Kraftfahrzeug weist ferner wenigstens eine Recheneinrichtung 6 auf, die im vorliegenden Ausführungsbeispiel auch Zugriff auf den Anschluss 4 hat, hier, um Kommunikationssignale zur Herstellung einer Kommunikationsverbindung mit weiteren Recheneinrichtungen 6 anderer Kraftfahrzeuge 1 über einen Server auszutauschen. Alternativ in einer nicht zur Erfindung gehörigen Ausgestaltung ist es auch möglich, wie durch die Mittel 7 zur Herstellung einer Kommunikationsverbindung angedeutet, die Kommunikationsverbindung, welche primär zum Server hergestellt wird, drahtgebunden und/oder bevorzugt wenigstens teilweise drahtlos herzustellen, beispielsweise über ein WLAN-Netzwerk.

Vorliegend ist die Recheneinrichtung 6 verschiedenen Fahrzeugsystemen 8 zugeordnet, beispielsweise einem Navigationssystem und einem Reichweitenberechnungssystem, welche rechenintensive Berechnungsprozesse beziehungsweise deren Ergebnisse anfordern.

Der Recheneinrichtung 6 ist ferner eine Speichereinrichtung 9 für Messdaten verschiedener, hier nicht näher dargestellter Sensoren zugeordnet. Dort können während einer Fahrt aufgenommene Messdaten zur späteren Auswertung, hier innerhalb eines derartigen Berechnungsprozesses, vorgehalten werden. Dabei handelt es sich vorliegend insbesondere um Kamerabilder einer Kamera und Messdaten weiterer Umweltsensoren. Selbstverständlich können abhängig von den durchzuführenden Berechnungsprozessen auch eine Vielzahl anderer Daten in der Speichereinrichtung 9 abgelegt werden.

Das Kraftfahrzeug 1 ist geeignet, im erfindungsgemäßen Verfahren eingesetzt zu werden, in dem aus verschiedenen Recheneinrichtungen 6 von Kraftfahrzeugen gleichen Herstellers und gegebenenfalls solchen, die sich innerhalb einer bestimmten, von der Reichweite der Kraftfahrzeuge 1 abhängigen Region befinden, ein Rechnercluster 10 gemäß Fig. 2 aufgebaut wird, wenn sich die Kraftfahrzeuge 1 in einem Ladeprozess befinden. Das bedeutet vorliegend konkret, dass immer dann, wenn ein Kraftfahrzeug 1 an eine Ladestation 5 angeschlossen wird, eine Kommunikationsverbindung 11 zu einem Server 12, also einer zentralen Recheneinrichtung, die keinem Kraftfahrzeug 1 zugeordnet ist, aufgebaut wird. Der Server 12 kann die Recheneinrichtung 6 dann dem Cluster 10 hinzufügen, wenn diese die geeigneten Bedingungen, insbesondere den gleichen Hersteller, gegebenenfalls auch den gleichen Typ, des Kraftfahrzeugs, aufweist. Wie bereits erwähnt, kann in manchen Ausführungsbeispielen auch eine regionale Zuordnung und Bildung von Rechnerclustern 10 erfolgen. Über den Server 12 können die Rechnereinrichtungen 6 miteinander kommunizieren und besonders aufwendige Berechnungsprozesse durchführen. Dabei wird, koordiniert mit dem Server 12, die benötigte Rechenleistung auf die verschiedenen Recheneinrichtungen 6 verteilt. Dabei sei an dieser Stelle noch angemerkt, dass der Server 12 nicht zwangsläufig erforderlich ist, sondern es durchaus möglich ist, selbst organisierende Rechnercluster 10 im Rahmen der vorliegenden Erfindung zu verwenden, die auch ohne einen Server 12 auskommen.

Während sich Berechnungsprozesse, beispielsweise die hochexakte Berechnung einer aktuellen Reichweite eines Kraftfahrzeugs 1, durchaus nur auf ein bestimmtes Kraftfahrzeug 1 beziehen können, wobei die anderen Recheneinrichtungen 6 sozusagen bei der Durchführung des auf ein spezielles Kraftfahrzeug 1 bezogenen Rechnungsprozesses helfen, ist es in diesem Ausführungsbeispiel auch vorgesehen, wenigstens einen Berechnungsprozess durchzuführen, der nützliche Ergebnisse für mehrere Kraftfahrzeuge 1 liefert und auf eine gemeinsame Datenbasis der Kraftfahrzeuge 1 zurückgreift, wobei die entsprechenden Daten beispielsweise in den Speichereinrichtungen 9 gespeichert sein können.

Vorliegend handelt es sich dabei um einen Prozess zur Aktualisierung von Kartendaten, die in einem Navigationssystem vorliegen und beispielsweise auch zur Reichweitenberechnung eingesetzt werden können. Dabei werden für Strecken, insbesondere solche, die sich innerhalb der Reichweite der Kraftfahrzeuge 1 befinden, Messdaten auch anderer Kraftfahrzeuge ausgewertet, insbesondere Kamerabilder, wenn diese aktueller als die im eigenen Kraftfahrzeug 1 vorhandenen Messdaten sind. So können beispielsweise aktuelle Baustellen oder Wechsel in Verkehrszeichen festgestellt werden und den Kartendaten entsprechend zugeordnet werden. Eine solche Aktualisierung von Kartendaten muss sich selbstverständlich nicht nur auf ein einziges Kraftfahrzeug 1 beziehen, sondern kann dann, wenn ein neues Ergebnis vorliegt, für alle Kraftfahrzeuge 1 übernommen werden.

Denkbar ist es im Rahmen der vorliegenden Erfindung jedoch auch, Daten anderer Kraftfahrzeuge für ein bestimmtes Kraftfahrzeug auf dieses bezogen auszuwerten, beispielsweise neuere Kamerabilder des anderen Kraftfahrzeuges dahingehend zu betrachten, ob gegenüber eigenen, archivierten Kamerabildern Änderungen vorliegen und dergleichen.

Es sei schließlich noch angemerkt, dass der Server 12 im vorliegenden Ausführungsbeispiel auch eine Anonymisierung der zwischen den Recheneinrichtungen 6 ausgetauschten Daten vornimmt.

## Patentansprüche

1. Verfahren zur Durchführung wenigstens eines Berechnungsprozesses in einem Kraftfahrzeug (1) mit einem Elektromotor (2) und einem diesem zugeordneten Energiespeicher (3),
wobei während eines Ladeprozesses des Energiespeichers eine Kommunikationsverbindung (11) mit wenigstens einem weiteren im Ladeprozess befindlichen Kraftfahrzeug (1) aufgebaut wird, **dadurch gekennzeichnet, dass** Recheneinrichtungen (6) der verbundenen Kraftfahrzeuge als ein Rechnercluster zur Durchführung des Berechnungsprozesses verwendet werden, wobei die Kommunikationsverbindung über die Stromzuführung zu dem Energiespeicher hergestellt wird.

2. Verfahren nach Anspruch 1,
**dadurch gekennzeichnet,**
**dass** die Kommunikationsverbindung durch Aufmodulation von Informationen hergestellt wird.

3. Verfahren nach einem der vorangehenden Ansprüche,
**dadurch gekennzeichnet,**
**dass** zur Bildung und/oder Steuerung des Rechnerclusters ein keinem Kraftfahrzeug zugeordneter Server (12) verwendet wird.

4. Verfahren nach Anspruch 3,
**dadurch gekennzeichnet,**
**dass** durch den Server eine Anonymisierung von im Rahmen des Berechnungsprozesses auszutauschenden Daten vorgenommen wird.

5. Verfahren nach einem der vorangehenden Ansprüche,
**dadurch gekennzeichnet,**
**dass** in einem Rechnercluster nur Kraftfahrzeuge eines Herstellers und/oder Typs und/oder in einer bestimmten geographischen Region befindliche Kraftfahrzeuge verbunden werden.

6. Verfahren nach Anspruch 5,
**dadurch gekennzeichnet,**
**dass** die geographische Region durch eine aktuelle Reichweite des Kraftfahrzeugs definiert wird.

7. Verfahren nach einem der vorangehenden Ansprüche,
**dadurch gekennzeichnet,**
**dass** als Berechnungsprozess eine Nachverarbeitung von während einer Fahrt aufgenommenen Messdaten und/oder eine Reichweitenberechnung und/oder eine Vorausberechnung von Daten hinsichtlich einer noch erfolgenden Fahrt erfolgt.

8. Verfahren nach Anspruch 7,
**dadurch gekennzeichnet,**
**dass** während einer Fahrt des Kraftfahrzeugs eine weniger genaue Auswertung von Messdaten erfolgt, welcher im Rahmen des Berechnungsprozesses eine genauere Auswertung folgt.

9. Verfahren nach einem der vorangehenden Ansprüche,
**dadurch gekennzeichnet,**
**dass** wenigstens ein Daten mehrerer Kraftfahrzeuge verwendender Berechnungsprozess durchgeführt wird.

10. Verfahren nach Anspruch 9,
**dadurch gekennzeichnet,**
**dass** eine Aktualisierung von Daten eines Navigationssystems und/oder von einer Reichweitenberechnung zugrunde liegenden Messdaten unter Berücksichtigung von Daten anderer Kraftfahrzeuge erfolgt.

11. Verfahren nach Anspruch 10,
**dadurch gekennzeichnet,**
**dass** die Aktualisierung bezogen auf im Rahmen einer aktuellen Reichweite des Kraftfahrzeugs erreichbare Orte erfolgt.

12. Kraftfahrzeug (1), umfassend einen Elektromotor (2), einen diesem zugeordneten Energiespeicher (3), eine Recheneinrichtung (6) und Mittel (7) zur Herstellung einer Kommunikationsverbindung (11) zur Durchführung eines Verfahrens nach einem der vorangehenden Ansprüche.

## Claims

1. Method for performing at least one computation process in a motor vehicle (1) having an electric motor (2) and an energy store (3) associated therewith, wherein during a charging process for the energy store a communication link (11) to at least one further motor vehicle (1) that is in the charging process is set up, **characterised in that** computation devices (6) of the connected motor vehicles are used as a computer cluster for performing the computation process, wherein the communication link is produced via the power supply lead to the energy store.

2. Method according to claim 1, **characterised in that** the communication link is produced by modulating information.

3. Method according to one of the preceding claims, **characterised in that** the establishment and/or control of the computer cluster uses a server (12) that is not associated with a motor vehicle.

4. Method according to claim 3, **characterised in that** the server performs an anonymisation of the data to be exchanged during the computation process.

5. Method according to one of the preceding claims, **characterised in that** only motor vehicles of one manufacturer and/or model and/or found in a particular geographical region will be connected in a computer cluster.

6. Method according to claim 5, **characterised in that** the geographical region is defined by a current operating range of the motor vehicle.

7. Method according to one of the preceding claims, **characterised in that** the computation process occurs as a post processing of measurement data recorded during a journey and/or an operating range computation and/or an advance computation of data with regard to a still to occur journey.

8. Method according to claim 7, **characterised in that** during a journey of the motor vehicle a less accurate evaluation of measurement data occurs, which follows a more accurate evaluation as part of the computation process.

9. Method according to one of the preceding claims, **characterised in that** at least one piece of data of a computation process used by a plurality of motor vehicles is produced.

10. Method according to claim 9, **characterised in that** an updating of the data of a navigation system and/or of measurement data underlying an operating range computation occurs, taking into account data from other motor vehicles.

11. Method according to claim 10, **characterised in that** the updating occurs relating to reachable locations in the context of a current operating range of the motor vehicle.

12. Motor vehicle (1), comprising an electric motor (2), an associated energy store (3), a computation device (6) and means (7) for the production of a communication link (11) for performing one of the methods according to one of the preceding claims.

## Revendications

1. Procédé de réalisation au moins d'un processus de calcul dans un véhicule à moteur (1) avec un moteur électrique (2) et un réservoir d'énergie (3) qui lui est affecté,
dans lequel, au cours d'un processus de chargement du réservoir d'énergie, une liaison de communication (11) est établie avec au moins un autre véhicule à moteur (1) participant au processus de chargement, **caractérisé en ce que** l'on utilise des dispositifs de calcul (6) des véhicules à moteurs reliés sous la forme d'un groupe d'ordinateurs pour réaliser le processus de calcul, dans lequel la liaison de communication est établie avec le réservoir d'énergie via l'arrivée de courant.

2. Procédé selon la revendication 1,
**caractérisé en ce que** :
la liaison de communication est établie par modulation d'informations.

3. Procédé selon l'une quelconque des revendications précédentes,
**caractérisé en ce que** :
l'on utilise pour la formation et/ou la commande du groupe d'ordinateurs un serveur (12) qui n'est affecté à aucun véhicule à moteur.

4. Procédé selon la revendication 3,
**caractérisé en ce que** :
une anonymisation de données à échanger dans le cadre du processus de calcul est effectuée par le serveur.

5. Procédé selon l'une quelconque des revendications précédentes,
**caractérisé en ce que**,
dans un groupe d'ordinateurs, seuls les véhicules à moteur d'un fabricant et/ou d'un type et/ou les véhicules à moteur se trouvant dans une région géographique déterminée sont reliés.

6. Procédé selon la revendication 5,
**caractérisé en ce que** :
la région géographique est définie par une desserte courante du véhicule à moteur.

7. Procédé selon l'une quelconque des revendications précédentes,
**caractérisé en ce que**,
comme processus de calcul, il se produit un post-traitement de données de mesure reçues au cours d'un trajet et/ou un calcul de desserte et/ou un calcul préalable de données concernant un trajet encore à venir.

8. Procédé selon la revendication 7,
**caractérisé en ce que**,
au cours d'un trajet du véhicule à moteur, il se produit une évaluation moins précise des données de mesure, qui est suivie, dans le cadre du processus de calcul, d'une évaluation plus précise.

9. Procédé selon l'une quelconque des revendications précédentes,
**caractérisé en ce que** :
l'on réalise au moins un processus de calcul utilisant les données de plusieurs véhicules à moteur.

10. Procédé selon la revendication 9,
**caractérisé en ce que** :
il se produit une actualisation de données d'un système de navigation et/ou de données de mesure qui sont à la base d'un calcul de desserte en tenant compte de données d'autres véhicules à moteur.

11. Procédé selon la revendication 10,
**caractérisé en ce que** :
l'actualisation se fait sur la base de lieux qui peuvent être atteints dans le cadre d'une desserte courante du véhicule à moteur.

12. Véhicule à moteur (1) comprenant un moteur électrique (2), un réservoir d'énergie (3) qui lui est affecté, un dispositif de calcul (6) et des moyens (7) d'établissement d'une liaison de communication (11) pour réaliser un procédé selon l'une quelconque des revendications précédentes.
